# EUROPEAN PATENT APPLICATION

(11) **EP 4 516 491 A1**
(43) Date of publication of application: **05.03.2025**
(21) Application number: 23194000.8
(22) Date of filing: 29.08.2023
(51) Int. Cl.: B29C 70/38, B25J 15/00, B25J 15/06, B29C 31/08, B29C 65/78, B29C 70/54, B29D 99/00, B32B 38/18, F03D 1/06, B29C 65/00, B29C 70/30, B29C 33/30

(54) **METHOD FOR ARRANGING A SHELL SECTION ON A BLADE MOLD FOR MANUFACTURING A BLADE OR A HALF SHELL OF A BLADE OF A WIND TURBINE, AND ASSEMBLY RACK FOR ARRANGING A SHELL SECTION ON A BLADE MOLD FOR MANUFACTURING A BLADE OR A HALF SHELL OF A BLADE OF A WIND TURBINE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Method for arranging a shell section (20, 35, 53), particularly a half shell section, on a blade mold (22) for manufacturing a blade or a half shell of a blade of a wind turbine, wherein the method comprises the steps:
- providing several preform elements (21, 36, 51), each comprising a stack of layers of fiber mats fixated to each other,
- arranging the preform elements (21, 36, 51) on supporting elements (8) of a frame (2, 50) of an assembly rack (1) and adhering the preform elements (21, 36, 51) with each other to constitute the shell section (20, 35, 53),
- gripping the shell section (20, 35, 53) to the frame (2, 50) by gripper elements (17) of the assembly rack (1),
- turning the frame (2, 50) and the shell section (20, 35, 53) upside down by at least one swivel joint (26) which rotatably connects the frame (2, 50) with a stand (3) of the assembly rack (1),
- lifting the shell section (20, 35, 53) and placing it on the blade mold (22), wherein the frame (2, 50) being disconnected from the stand (3) is used as a lifting yoke.

## Description

The present invention relates to a method for arranging a shell section, particularly a half shell section, on a blade mold for manufacturing a blade or a half shell of a blade of a wind turbine. Furthermore, the present invention relates to an assembly rack for arranging a shell section on a blade mold for manufacturing a blade or a half shell of a blade of a wind turbine.

For manufacturing blades for wind turbines, typically pre-manufactured preform elements are used. Preform elements often contain thermoset or thermoplastic binder on reinforcement fabrics. Typically, the binder is activatable by heat, and, when cooling back to room temperature, the reinforcement fabrics are adhered to each other by the binder. Hence, preform elements are typically stacks containing several layers of reinforcement fabrics being in a desired shape.

For manufacturing the final blade or half shell of a blade, the preform elements are typically arranged laterally on the mold surface of a blade mold. Regarding this step, there is the problem that adjacent preform elements, particularly if they comprise an angled lateral surface, often slide off from their designated position because of their own weight, which leads to an unwanted lateral overlap of the preform elements. Additionally, locating the preform elements in the blade mold as precise as it is desired is often cumbersome. Since preform elements typically comprise a large size of several meters and since the respective tolerance regarding the position of the preform elements in the blade mold is quite low such that only small deviations between the actual and the required position are allowed, it is a time-consuming and difficult process to position these elements as precisely as desired. Apart from this, it is typically required to inspect whether the preform elements are correctly positioned in the blade mold after they have been arranged there. It is also difficult and cumbersome to perform this inspection.

It is an object of the present invention to provide an enhanced concept with respect to the manufacturing process of a wind turbine blade, particularly regarding the process of arranging preform elements in a blade mold.

This object is achieved by a method as described initially, wherein the method comprises the following steps:
- providing several preform elements, each comprising a stack of layers of fiber mats fixated to each other,
- arranging the preform elements on supporting elements of a frame of an assembly rack and adhering the preform elements with each other to constitute the shell section,
- gripping the shell section to the frame by gripper elements of the assembly rack,
- turning the frame and the shell section upside down by at least one swivel joint which rotatably connects the frame with a stand of the assembly rack,
- lifting the shell section and placing it on the blade mold, wherein the frame being disconnected from the stand is used as a lifting yoke.

The present invention concerns the manufacturing- and handling process of a shell section which is adapted to be connected to further shell sections to constitute the final wind turbine blade or the final half shell of the wind turbine blade to be produced. Hence, manufacturing the shell section is a sub-step of manufacturing the blade or the half shell of the blade of the wind turbine. The shell section can be a section which spans around a certain part along the circumference of the final blade. This means that several, particularly between two and ten, shell sections can be required to constitute the complete circumference of the final blade. Preferably, the shell section is a half shell section, i.e., a section which provides one half of the circumference of the final blade. That means that two respective half sections are required to realize the complete circumference of blade. The half shell section can be part of a half shell realizing the pressure side of the blade or a part of a half shell realizing the suction side of the blade. The shell section can be a third shell section such that three respective sections are required to realize the complete circumference of blade. The shell section can be a quarter shell section such that four respective sections are required to realize the complete circumference of blade etc.

The circumference of the final blade can be between 5 and 30 meters, particularly between 10 and 20 meters. Regarding the longitudinal extension of the blade, the shell section typically realizes only a part of the complete longitudinal extension. Particularly, more than three, particularly more than five, shell sections being arranged longitudinally to each other can be required to realize the complete blade. While the blade can have a total length of several tens of meters or even more than a hundred of meters, the length of the shell section can be between 1 and 30 meters, particularly between 12 and 16 meters, wherein the width of the shell section can be between 1 and 10 meters, particularly between 2.5 and 5 meters.

According to the present invention, several preform elements, for instance as described above, are provided. Each of the preform elements comprises several fiber mats which are adhered to each other. The fiber mats can consist of glass-, carbon-, and/or plastic fibers. For producing the preform elements, the layers of fiber- or fabric mats, which realize an enforcement means for the respective preform element, are arranged in a preform mold having a shape which corresponds to the designated shape of the preform element to be produced. The fiber mats are impregnated with a binding agent, e.g., with a powder binder. Applying heat to the stack can activate the binding agent to adhere the layers to each other and to conserve the current shape of the respective preform element. In addition to the fiber- or fabric mats, the preform element(s) can comprise at least one core component. The core component can consist of balsa wood and/or a foam material and/or a plastic material, particularly PET. In any case, the preform element(s) eventually comprise a sandwich-like structure.

Assuming that the shell section to be manufactured is supposed to have a desired section geometry, the step of arranging the preform elements on the supporting elements of the frame of an assembly rack and adhering the preform elements with each other to constitute the shell section can be performed by performing the following steps:
- providing the assembly rack with the several supporting elements which are arranged in a geometry which corresponds to the section geometry,
- arranging the preform elements on the supporting elements, particularly side-by-side, such that the preform elements are relatively positioned to each other in a geometry which corresponds to the section geometry, and
- adhering adjacent preform elements with each other to constitute the shell section.

The desired section geometry of the shell section can be the shape of this component after being manufactured. The desired section geometry is defined or given by the desired shape of the blade or the half shell to be produced, namely regarding the blade section which is constituted by the respective shell section. Hence, the sum of the desired section geometries of all shell sections which are used for manufacturing the complete blade or half shell results in the overall geometry or shape of this component. Concretely, the section geometry can be or describe a, particularly bent, two-dimensional curve which defines the surface of the blade or shell section, respectively.

According to another aspect of the method according to the present invention, the assembly rack is provided. The frame of the assembly rack is adapted to carry all preform elements used for producing the respective shell section. More precisely, the frame or assembly rack, respectively, comprises supporting elements on which the preform elements are located. The supporting elements can be arranged relatively to each other such that they or support plates of the supporting elements are positioned within a geometry which corresponds to or equals the section geometry.

The preform elements can be arranged on the supporting elements without being attached thereto, i.e., the preform elements can be held in their positions by their own weight only. Preferably, however, already after being arranged on the supporting elements, the preform elements can be gripped by gripper elements of the supporting elements to fasten or conserve the relative positions between the preform elements. Gripping the preform elements means that the respective preform element is temporarily fastened or attached to the respective supporting element. By this measure, the relative positions between the preform elements are protected from being shifted unwantedly, e.g., by incidental hits or sliding.

The preform elements can be arranged or located on the supporting elements side-by-side. That means that the preform elements are located next to each other such that they particularly form a mosaic like structure. The number of preform elements which are arranged or located on the supporting elements can be between two and ten. Particularly, two or three preform elements can be arranged laterally to each other to constitute the respective shell section. Assuming that the shell section is the half shell section, a certain number of, preferably three, preform elements can be arranged laterally next to each other on the supporting elements. It is possible that the handling of the half shell section is cumbersome, particularly because of its size. In this case, the number of preform elements which are arranged laterally to each other can be decreased, particularly to two, such that the resulting size of the shell section is smaller. In this case, a third- or quarter shell section or the like can be constituted.

Referring to the embodiment where the supporting elements are arranged in a geometry which corresponds to or equals the section geometry, the same holds true for the respectively arranged preform elements. Particularly if the supporting elements are spaced apart from each other, the preform elements arranged thereon are accessible from both sides such that manual corrections and/or inspections regarding the designated positions are simplified.

Next, after the preform elements are brought into their designated positions relatively to each other on the supporting elements, they are adhered to each other to conserve the designated shape and to build or finalize the shell section. Adhering the preform elements to each other can lead to provi-sory attaching positions or -areas which are sufficiently strong that the shell section can be further handled without that the shell section loose its designated shape. The attaching positions can be spot- or point-like such that the preform elements are adhered or pinned to each other at certain positions. The attaching areas can be stripe- or seam-like such that the preform elements are adhered to each other along their, for instance complete, lateral sides.

Next, further optional details regarding the step of arranging the preform elements on the supporting elements and adhering these preform elements with each other to constitute this shell section will be described. In a possible embodiment of the present invention, adjacent preform elements can be laterally in contact with each other after being arranged on the supporting elements. Being in contact with each other means that the respective supporting elements touch each other at their lateral sections or edges such that there is no free space between them. Hence, it becomes easier to adhere the preform elements with each other. Preferably, lateral sections or edges of adjacent preform elements can overlap each other. The overlapping regions or edges of the preform elements can comprise shapes which correspond to each other, i.e., which are negatives to each other. The preform elements typically comprise a constant thickness. Hence, preferably, the total thickness of the overlapping edges of two adjacent preform elements can equal this constant thickness. Particularly, the lateral sections have a tilted, particularly wedge-like, shape. In other words, the preform elements can comprise an angled lateral surface.

In a preferred embodiment of the present invention, the fiber mats of each of the preform elements are fixated to each other by means of a heat-activated binding agent, wherein the adjacent preform elements are adhered with each other by at least partially heating their lateral sections to re-activate the binding agent. As it has already been explained, the binding agent can be a powder binder. The attaching positions or -areas are defined by the regions of the preform elements which are heated after the preform elements have been arranged on the supporting elements. This re-heating causes a melting or liquidation of the binding agent such that the binding agent of two adjacent preform elements converge and provide a firm binder connection after curing the binding agent again. Advantageously, an already present component or means of the preform elements, namely the binding agent, is used to adhere the preform elements with each other. Alternatively, but less preferred, a separate glue or adhesive can be used for this purpose.

Another aspect regarding the present invention is the step of turning the frame and the respective shell section arranged thereon upside down after the preform elements have been adhered to each other. This is necessary since, before turning the shell section upside down, its upper surface which faces away from the frame is typically the surface which is arranged such that it is in contact with the mold surface of the blade mold. After the frame has been turned upside down, i.e., after it has been rotated about 180° around a horizontal axis, this surface of the shell section points downwards. Thus, for arranging the shell section on the mold surface of the blade mold, the frame and the shell section just need to be lowered into the blade mold.

One aspect which allows turning the frame and the shell section upside down is the fact that the assembly rack comprises the frame and the stand. The frame and the stand constituted two separate parts of the assembly rack, which are detectably connected such that the frame can be rotated around a, particularly horizontal, axis while the stand is securely positioned on the ground surface or floor, respectively. After the frame has turned upside down, it can be detached from the stand such that the frame and the shell section can be lifted away from the stand. The frame and the stand are connected by the at least one swivel joint which defines the rotational axis of the frame. Rotation fixing means like clamping means or the like can be provided to releasably fix the current rotational position of the frame with respect to the stand, particularly for loading the assembly rack with the preform elements.

Another aspect which allows turning the frame and the shell section upside down, i.e., to prevent the shell section from falling out from the frame while turning it upside down, is the fact that the shell section is gripped to the frame by gripper elements, wherein each of the gripper element is particularly a part of the respective supporting element. Each of the gripper elements is adapted to carry the weight of at least one of the preform elements such that all gripper elements are adapted to carried the total weight of the shell section. The process of gripping the shell section or preform elements can be already performed immediately after the preform elements have been arranged on the supporting elements, i.e., before the preform elements are adhered with each other. In any case, gripping the shell section is performed before turning the frame and the shell section upside down.

Preferably, the stand comprises transport rollers or -wheels to allow an easy transportation of the frame and, hence, of the shell section to the blade mold. Particularly after the shell section has been brought to the blade mold, the frame is disconnected from the stand and used as the lifting yoke to transport the shell section to the blade mold. After the shell section, particularly together with at least one further shell section, has been arranged in the blade mold, typically an adhering- or stiffening step is performed to gain the final mechanical stability of the blade or half shell and particularly to adhere the shell sections with each other. For this, resin can be injected into a mold cavity where the shell section(s) is or are arranged, wherein the resin is cured eventually.

Next, central advantages of the present invention will be described. One central advantage of the present invention arises from the fact that the manufactured shell section can be used for manufacturing the blade or half shell of a blade. Hence, for manufacturing the blade or half shell of a blade, the preform elements are not located in the blade mold piece by piece, but they are arranged there together and at once, namely as components of the shell section being adhered with each other. Hence, the problems which have been described above in this context of arranging preform elements separately in the mold surface are overcome. The preform elements being a part of the shell section which is arranged within the blade mold are already in their desired relative positions to each other. Particularly, the problems regarding the relative sliding and the exact positioning of the preform elements within the blade mold are solved by using the shell section.

Another central advantage of the present invention arises from the fact that the frame and, hence, a part of the assembly rack is used as the lifting yoke to transport the shell section to the blade mold. In other words, the assembly rack acts as a means for holding and positioning the preform elements to build the shell section on the one hand and as a transporting means for lifting the respective shell section into the blade mold on the other hand. Hence, several steps for arranging the shell section in the blade mold are not necessary, particularly detaching the shell section from the frame before attaching it with a separate yoke to lift it from the assembly rack to the blade mold.

In a possible embodiment of the method according to the present invention, after the preform elements have been arranged on the supporting elements, the frame and the shell section can be moved from a lower position into a higher position to allow the turning movement of the frame and the shell section. Assuming that the frame and the shell section are in the lower position, these components are arranged close to the floor such that at least the lowest preform elements can be reached by personnel for performing manual corrections and/or inspections regarding the designated positions of the preform elements without any further devices like a ladder. However, being in the lower position results in the problem that turning the frame and the shell section upside down is not possible since the floor would block the respective movement. Hence, before turning the frame upside down, the frame and the shell section are moved into the higher position such that the distance between the floor and these components gets large enough such that the respective turning movement is possible.

For lifting the shell section and placing it on the blade mold, the frame can be connected to a lifting means. The lifting means can comprise or be a crane, particularly an overhead crane, wherein the frame can be connected to a rope of the crane. The frame can comprise a connection means, particularly being or comprising a lug, such that it can be securely connected to the rope. The lifting means is adapted to lift the frame and the shell section. Hence, the lifting means is used to transport the frame and the shell section away from the stand, and to transport it to the blade mold. Next, the frame and shell section are lowered onto the mold surface of the blade mold and the gripper elements release the shell section. Hence, the shell section can be placed on the blade mold by the lifting means.

Additionally, the object of the present invention is achieved by an assembly rack as described initially, wherein the assembly rack is adapted to be used for the method as described above. The assembly rack according to the present invention comprises a stand and a frame, wherein several supporting elements are arranged on the frame, wherein gripper elements, particularly of the supporting elements, are provided to grip the shell section, wherein the frame is rotatably connected to the stand by at least one swivel joint to allow turning the frame and the shell section upside down, wherein the frame is adapted to be disconnected from the stand and to be used as a lifting yoke for lifting the shell section and placing it on the blade mold. All features, aspects and advantages which are described with respect to the method according to the present invention can be applied to the assembly rack according to the present invention and vice versa.

As it has already been described in the context of the method according to the present invention, the supporting elements can be arranged in a geometry which corresponds to the desired section geometry of the shell section. The respective shell section can extend at least around a certain part, particularly around one third or around one quarter or, of the circumference of the blade. Hence, the same holds true for the geometry in which the supporting elements are arranged. For the case that the shell section extends at least around one third of the circumference of the blade, this his means that, referring to a central point of the cross-section of the blade, the respective shell section covers an angle of at least 120°. Preferably this angle is 180° which particularly means that the shell section is a half shell section. It is possible that the respective shell section extends up to around two thirds of the circumference of the blade. The assembly rack or the frame, respectively, can comprise an elongated structure. Regarding the respective cross-section of the frame, the line on which the supporting elements are arranged can correspond to the respective cross-sectional line of the blade to be produced, namely at the longitudinal and circumferential position where the shell section to be manufactured will be located.

In a preferred embodiment of the assembly rack according to the present invention, two swivel joints are provided on both lateral ends of the frame to attach the frame to the stand. Hence, attaching points connecting the frame with the stand are provided on both lateral ends of the frame which realizes a mechanically stable connection between these components. The line connecting the swivel joints with each other can define the, particularly horizontal, rotational- or swivel axis. Particularly, the stand comprises two receiving portions and the frame comprises a bolt on each on its lateral ends, wherein each of the swivel joints is provided by one of the bolts being rotatably arranged within one of the receiving portions.

The stand can be or comprise a lattice-like structure and/or be made of a metal, for instance steel. Preferably, the stand comprises two, particularly vertically oriented, posts, wherein on each of the posts one swivel joint is arranged. Each of the swivel joint can be movably arranged on one of the posts, wherein it is releasably fixable on respective vertical positions. For this purpose, vertical fixing means like clamping means or the like can be provided. Hence, for bringing the frame from the lower into the higher position, the respective vertical fixing means can be opened, the frame can be lifted into the higher position and the vertical fixing means can be closed again. Next, the rotation fixing means can be opened and the frame can be turned upside down. For lifting the frame, a lifting motor, particularly of the assembly rack, can be provided. For turning the frame upside down, a rotation motor, particularly of the assembly rack, can be provided.

According to a concrete and optional embodiment, each of the posts can be a sliding post, wherein each of the swivel joints is arranged on or provided by a slide which is movable along the respective sliding post. In this embodiment, the frame and the shell section are movable from a lower position into a higher position to allow the turning movement of the frame and the shell section. The slide can comprise the receiving portion which can be open upwards and preferably U-shaped such that lifting the frame upwards leads to moving the bolts out of the respective receiving portion upwards. Each of the sliding post can comprise two vertical piles having the respective swivel joint guided in between.

Particularly, at least one of the supporting elements comprises a heating means and/or at least one heating device, particularly being a heating blanket, is provided which is releasably fixable to the supporting elements or to another component of the assembly rack, wherein the heating means and/or the heating device is adapted to generate heat which is transferrable to the preform element or the preform elements arranged thereon to activate the binding agent. The heating means and/or the heating device are in a thermal contact with the preform element(s) arranged thereon such that heat which is produced by the heating means and/or the heating device is transferred to the preform element(s). The heat transfer is effective enough that the temperature of the preform element(s) can raise above the activation temperature of the binding agent. Most preferably, the heating means is integrated only in some, i.e., not in all, of the supporting elements, for instance in the supporting elements which area located where two adjacent preform elements are in contact with each other. The heating means and/or the heating device can be or comprise an electric heater. The heating device can be stripe- and/or blanket-like. The heating device can be arranged, particularly on the supporting elements along a common seam which is constituted between two adjacent preform elements, wherein a stripe-like attaching area is realized between these elements.

The assembly rack according to the present invention comprises gripper elements. In a preferred embodiment, at least one of the supporting elements comprises a gripper element for gripping the preform elements arranged thereon. The gripper element is adapted to create an attaching force which prevents a change of the relative position between the supporting element and the preform element(s) arranged thereon. The gripper elements can be or can comprise needle grippers and/or vacuum grippers and/or Bernoulli grippers and/or vortex grippers. Needle grippers comprise at least one needle which can be moved out from and retracted into the supporting element or support plate, respectively. When being moved out from the interior of the supporting element or support plate, respectively, the at least one needle protrudes from its surface and penetrates the preform element arranged thereon. Hence, the preform element(s) being positioned on the respective supporting element is held by the at least one needle in position. Several needles can be provided which can be arranged tilted to each other and to this surface. In other words, several needles which can be moved out from the support plate into different directions can be provided. Vacuum grippers typically are or comprise a suction cup, therein a vacuum can be created between the vacuum gripper and the preform element, particularly by a vacuum pump, to hold the preform element in position. Bernoulli grippers and vortex grippers create an airflow between the gripper element and the preform element such that a holding force holding the preform element on the gripper element is created because of the Bernoulli effect. The heating means as described above can be integrated in the gripper element.

The frame can comprise several carrier bars on which the supporting elements are attached. The frame can be lattice-like such that the preform elements being arranged on or held by the supporting elements can be reached by both sides, particularly when the frame is in the lower position. The bars which constitute the frame can be made of a metal, for instance steel. There can be longitudinal bars which extend along the longitudinal direction of the assembly rack. There can be cross-sectional bars, wherein at least a part of these bars can be the carrier bars, which extend along the cross-section of the assembly rack. The carrier bars can have a bent structure or shape which corresponds to the section geometry. The frame can comprise at least one connection means, being particularly a lug, such that the frame is connectable with a lifting means, to allow for lifting the frame and the shell section and for placing the shell section on the blade mold, using the frame as the lifting yoke.

The relative positions of the supporting elements to each other can be adjustable and lockable. In this embodiment, the frame does comprise a changeable structure regarding the geometry in which the supporting elements are arranged. Hence, the frame can be used for manufacturing different shell sections having different shapes and geometries.

In a possible embodiment of the invention, at least one of the supporting elements is movable along the respective carrier bar being a sliding rail. Hence, the supporting elements can be brought into the ideal position depending on the shape and/or size of the preform elements. Particularly, the supporting elements comprising the heating means can be brought into the position where two adjacent preform elements are in contact with each other and, hence, build a common seam. Serval supporting elements and, thus, heating means can be arranged along the longitudinal direction of this seam. At least one of the supporting elements can be movable perpendicularly with respect to the respective carrier bar. Moving the supporting elements perpendicularly to the carrier bar changes the diameter of the section geometry. The supporting elements are lockable in the respective positions, e.g., by using clamping- and/or screwing devices.

If the carrier bar is the sliding rail, the at least one movable supporting element can be connected to a sliding shoe which is guided in the respective sliding rail. In this embodiment, the sliding shoe and, hence, the respective supporting element is movable along the longitudinal direction of the sliding rail. The sliding rail and the sliding shoe can have cross-sections which correspond to each other. Particularly, the cross-section of the sliding rail comprises a U-shape, wherein on the open ends of vertical bars of the U-shape protrusions which face each other can be arranged such that the sliding shoe, which comprises a cross-section which corresponds to the interior of the U-shape, is undetachably arranged within the sliding rail.

The at least one movable supporting element can be or comprise a support plate on which the respective preform element is arrangeable. The support plate can be made of hard foam. Optional heating means and/or gripper elements can be arranged within the support plate, particularly within an opening or gap of the support plate. Preferably, the support plate is height-adjustable with respect to the respective carrier bar. The support plate can be connected to one end of a threaded bar, wherein the other end of the threaded bar can be connected to the sliding shoe. The threaded bar can be arranged within an internal thread of the sliding shoe such that screwing the threaded bar changes the height of the support plate.

The frame can have a concave shape such that it is adapted to be used for manufacturing a shell section which has a convex section geometry. In this embodiment, the cross-sectional geometry of the frame is a U- or C-shape which is open upwards. Alternatively, the assembly rack according to the present invention can have a convex shape such that it is adapted to be used for manufacturing a shell section which has a concave section geometry. In this embodiment, the cross-sectional geometry of the frame is a U- or C-shape which is open downwards. Concretely, the carrier bars can have the respective U- or C-shape. The shell section has the respectively other shape, since it is turned upside down.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a perspective view on a first embodiment of an assembly rack according to the present invention,
- Fig. 2: a detailed view on two supporting elements of the assembly rack of fig. 1,
- Fig. 3: a detailed view on a gripper element of the supporting element of fig. 2,
- Fig. 4-8: perspective views regarding manufacturing steps for manufacturing a half shell of a wind turbine blade, wherein a shell section is arranged on a blade mold according to a first embodiment of a method according to the present invention using the assembly rack of fig. 1,
- Fig. 9: a perspective view on a second embodiment of an assembly rack according to the present invention, and
- Fig. 10-14: perspective views regarding manufacturing steps for manufacturing a wind turbine blade, wherein a shell section is arranged on a blade mold according to a second embodiment of a method according to the present invention using the assembly rack of fig. 9, and
- Fig. 15-16: perspective views on a frame of an assembly rack according to a further embodiment being equipped with preform elements.

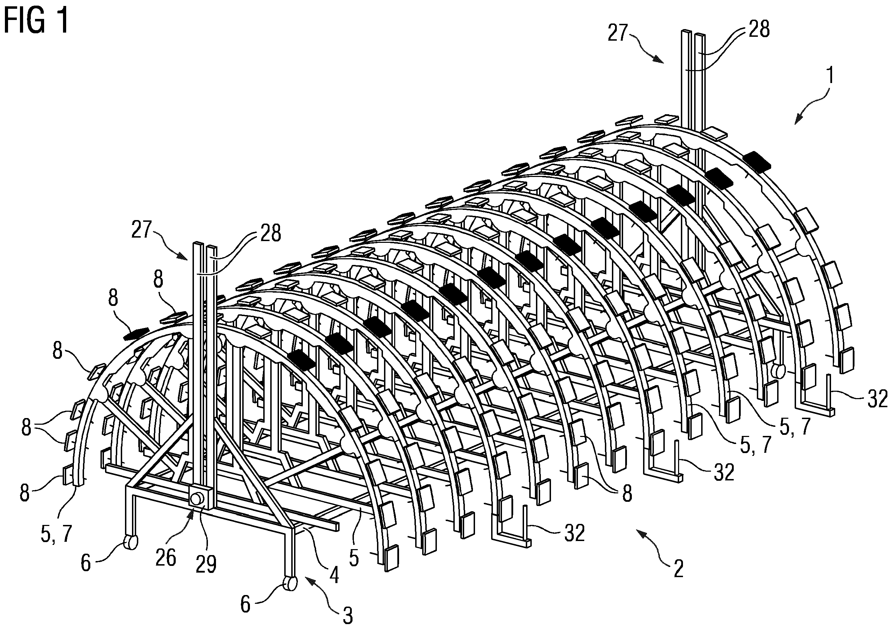

Fig. 1 shows a perspective view on an assembly rack 1 according to a first embodiment of the present invention. The assembly rack 1 comprises a lattice-like frame 2 and a stand 3. The assembly rack 1, i.e., the stand 3, comprises two longitudinal bars 4 which extend parallel along the longitudinal or axial direction of the assembly rack 1. The frame 2 comprises cross-sectional bars 5 which extend perpendicular to this direction and which rest on the longitudinal bars 4. The bars 4, 5 are made of a metal like steel. The stand 3 comprises transport rollers or -wheels 6 to allow an easy transportation of the assembly rack 1.

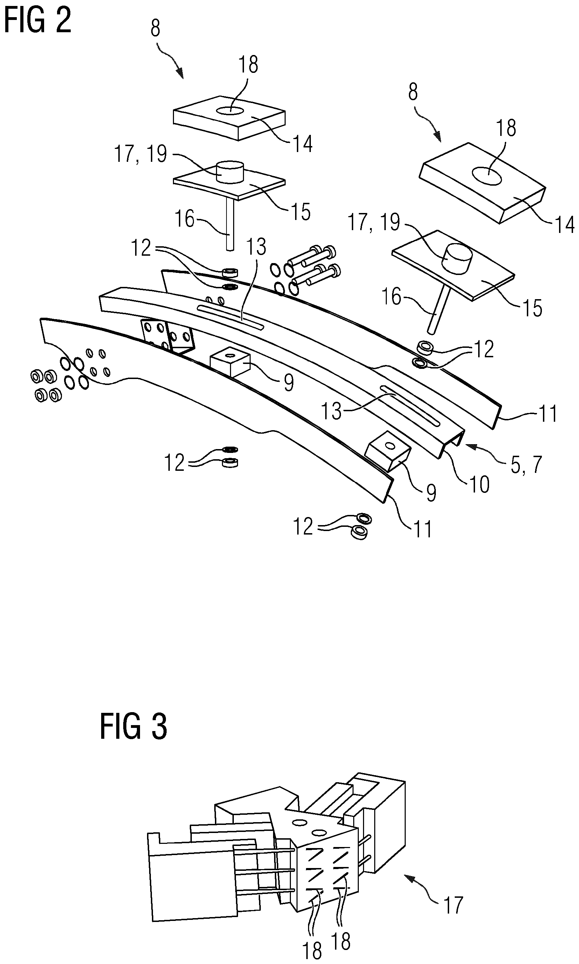

Some of the cross-sectional bars 5 have a bent structure to provide a convex geometry of the frame 2. These bars 5 are carrier bars 7 which carry supporting elements 8 or on which supporting elements 8 are arranged. A close-up and exploded view on two of the supporting elements 8 and on the respective carrier bar 7 is shown in fig. 2. Each of the supporting elements 8 is movable along the longitudinal direction of the carrier bar 7 which, hence, is a sliding rail. For this, each of the supporting elements 8 is connected to a sliding shoe 9 which is guided along the longitudinal direction of the carrier bar 7. The carrier bar 7 comprises a central bar 10 and two lateral ridges 11 which are held in position by screwing means. The sliding shoes 9 are guided within a U-shaped cross section of the central bar 10. Clamping means 12 which are guided through a sliding hole 13 are provided to lock the longitudinal position of the respective supporting element 8.

The supporting element 8 comprises or is a support plate 14 being made of a hard foam and being arranged on a metal plate 15. The supporting element 8 or support plate 14, respectively, is connected with one end of a threaded bar 16, which is connected with the sliding shoe 9 on its other end. The threaded bar 16 is arranged within an internal thread of the sliding shoe 9 such that screwing the threaded bar changes the distance between the supporting elements 8 and the carrier bar 7. Thus, the support plate 14 is movable perpendicularly with respect to the longitudinal direction of the carrier bar 7 and, hence, height-adjustable with respect to the carrier bar 7.

Each of the supporting elements 8 comprises a gripper element 17 which is arranged within an opening 18 of the support plate 14. A detailed view of the gripper element 17 is shown in fig. 3. The gripper element 17 is a needle gripper comprising several needles 18 which can be moved out from and retracted into the surface of the support plate 14. Alternatively, the gripper elements 17 can be vacuum grippers and/or Bernoulli grippers and/or vortex grippers. The purpose of the gripper elements 17 will be described later.

Additionally, some of the supporting elements 8 comprise a heating means 19 being electric heaters, wherein the heating means 19 is not explicitly shown in the figures but indicated schematically. The heating means 19 are integrated in the gripper element 17 or in the support plate 14. In contrast to the gripper elements 17, not all supporting elements 8 comprise a heating means 19. Referring to figures 1 and 2, the supporting elements 8 which comprise a heating means 19 are marked by black color. Hence, as seen from the left to the right in fig. 1, i.e., into the longitudinal direction of the assembly rack 1 or frame 2, respectively, the supporting elements 8 which are located on the 11- and 1 o'clock position comprise heating means 19.

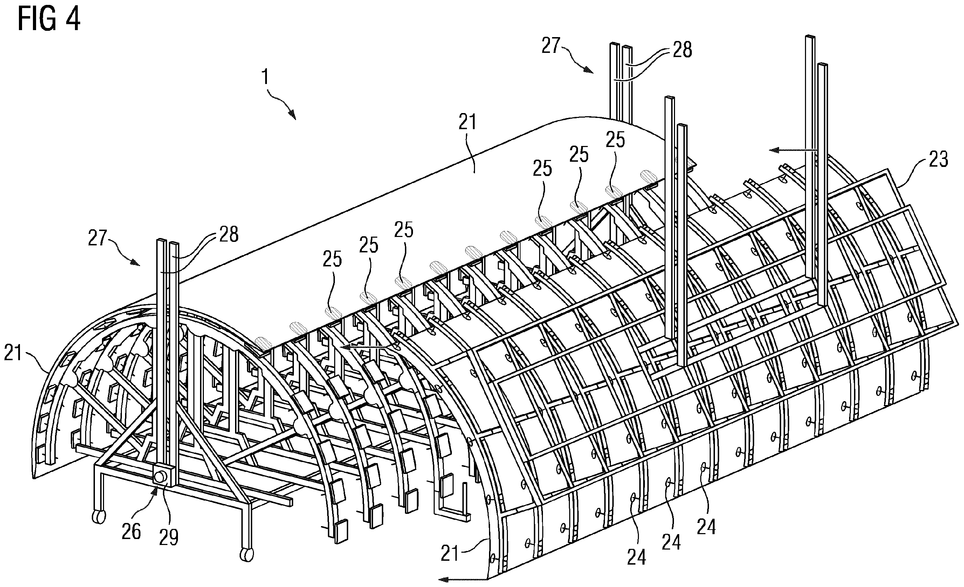

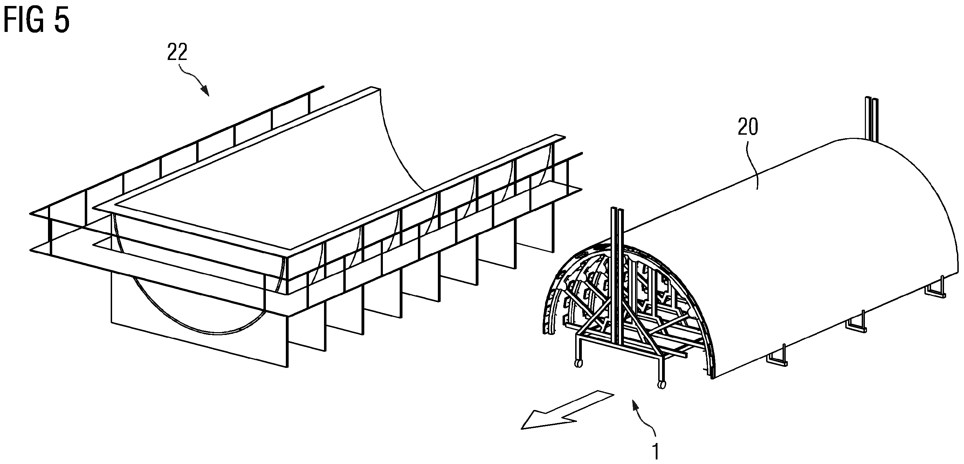

Next, a first embodiment of the method according to the present invention is explained with the help of figures 4 to 8, wherein the assembly rack 1 which has been explained with the help of figures 1 to 3 is used. The aim of this method is to arrange a shell section 20 (see fig. 5) which is made of several pre-manufactured preform elements 21 in a blade mold 22. The shell section 20 is a half shell section for a root section of a wind turbine blade to be produced subsequently.

Each of the preform elements 21 comprises a stack of layers of fiber- or fabric mats fixated to each other. The fiber mats consist of glass-, carbon-, and/or plastic fibers. For producing the preform elements 21, the layers of fiber- or fabric mats are arranged in a preform mold which comprises a shape which corresponds to the designated shape of the preform element 21 or part of the shell section 20, respectively, to be produced. The fiber mats are impregnated with a binding agent being a powder binder. Applying heat to the stack activates the binding agent to adhere the layers to each other and to conserve their shape. These details regarding the manufacturing and the structure of the preform elements 21 are not shown in the figures.

Referring to fig. 4 again, exemplarily three preform elements 21 are used to manufacture the shell section 20. In the situation of fig. 4, two preform elements 21 are already positioned on the frame 2, while the third preform element 21 is currently lowered into its designated position on the frame 2 using a yoke 23 and a lifting means like a crane. The overall geometry of the shell section 20 to be produced, which is a concave geometry, is the same geometry in which the supporting elements 8 are arranged. For this purpose, the relative positions between the supporting elements 8 are adjusted and fixated as it has been explained with the help of fig. 2. The preform elements 21 are arranged on the supporting elements 8 side-by-side.

The yoke 23 comprises a lattice- or frame-like structure having several holding elements 24 arranged thereon which are used to hold the preform element. The basic principle of the holding elements 24 is the same as of the supporting elements 8, i.e., the yoke 23 comprises sliding rails having sliding shoes arranged therein, whereby a threaded bar is connected to the sliding shoe on its one end and with a suction cup on its other end. Hence, the holding elements 24 are realized by vacuum grippers. The preform elements 21 are lowered on the frame 2 and released by the holding elements 24 such that they are relatively positioned to each other and build an overall geometry which corresponds to the desired geometry of the shell section 20. The preform elements 21 are accessible from both sides which allows for fine corrections and inspections regarding their designated positions in the next step.

Each of the three preform elements 21 have a longitudinal direction which extends parallel to the longitudinal direction of the assembly rack 1 or frame 2, respectively, when being arranged thereon. Adjacent preform elements 21 are arranged such that they are laterally in contact with each other. More precisely, lateral sections or edges of adjacent preform elements 21 overlap each other. The lateral sections of the preform elements 21 have a tilted or wedge-like shape. The overlapping and tilted edges of the preform elements 21 have shapes which correspond to each other such that the total thickness of the overlapping edges of the adjacent preform elements 21 equals the constant thickness of the remaining areas of the preform elements 21.

After placing the preform elements 21 on the supporting elements 8, the needles 18 of the gripper elements 17 are moved out such that they protrude from the support plate 14 and fix the preform elements 21 in their current positions. Since the needles 18 are tilted to each other, the preform elements 21 are protected from sliding away regarding all possible directions. The relative positions between the preform elements 21 are securely fastened by the gripper elements 17.

Next, the preform elements 21 are adhered with each other by heating parts of their lateral, overlapping edges. For this, the heating means 19 generate heat which is transferred to the overlapping edges, wherein the respective heated sections which constitute spot-like attaching positions 25 are indicated by hatchings in fig. 4. The re-heating causes the already activated binding agent to melt such that the binding agent of two adjacent preform elements 21 converge and provide a firm binder connection after being cured again.

Next, subsequent manufacturing steps for manufacturing a half shell of a wind turbine blade using the manufactured shell section 20 will be described with the help of figures 5 to 8. Referring to fig. 5, the assembly rack 1 is moved close to the blade mold 22 being a blade half mold. The transport rollers or -wheels 6 of the stand 3 make it possible to load the assembly rack 1 in one place and then to bring it to a new location, i.e., close to the blade mold 22. As it becomes apparent from fig. 5, apart from being upside down, a mold surface of the blade mold 22 comprises the same geometry as the shell section 20. The blade mold 22 has a longitudinal elongation which is larger than that longitudinal elongation of the shell section 21. I.e., except from the shell section 21, further shell sections will be arranged in the blade half mold 23 along its longitudinal direction to finally build the half shell of the wind turbine blade.

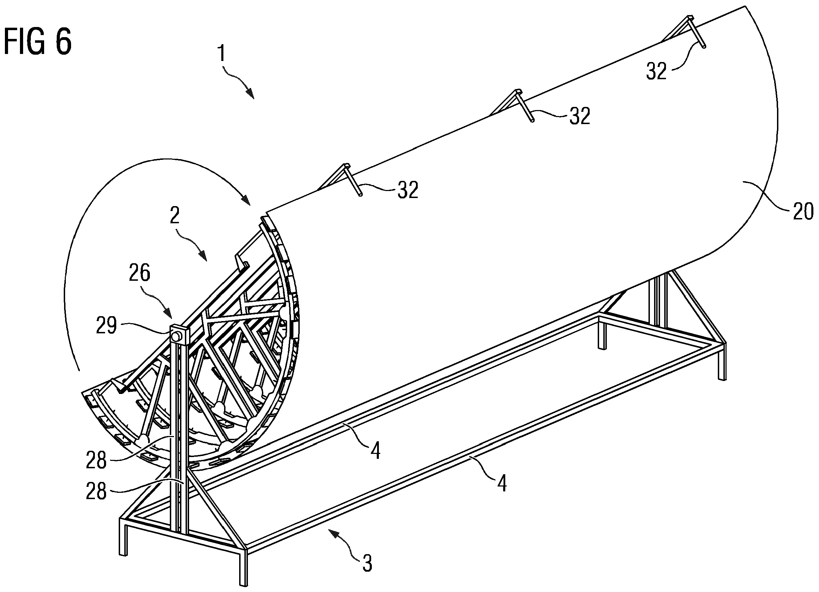

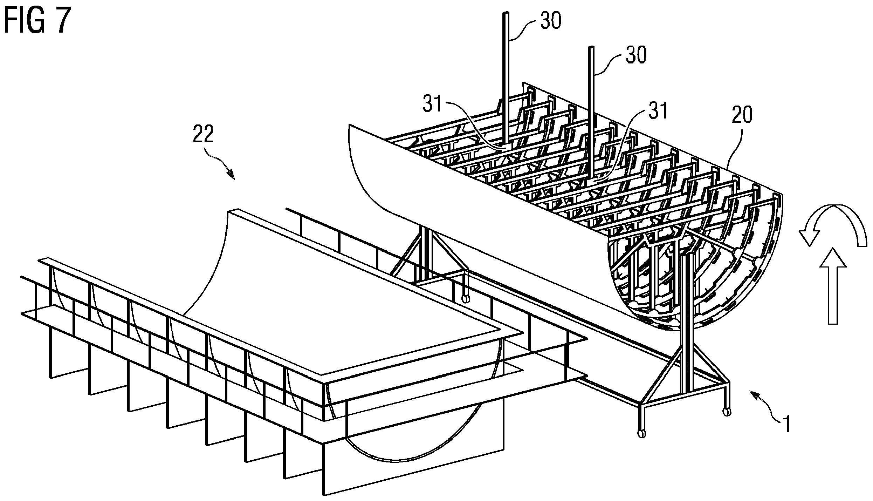

Next, assuming fig. 5 as the starting position, the shell section 20 is to be arranged or placed on the mold surface of the blade mold 22. However, as can be seen particularly from fig. 5, the mold surface of the blade mold 22 has a concave shape which is, regarding the convex shape of the shell section 20, upside down. Figures 5 to 7 illustrate how this problem is solved. After the assembly rack 1 and the shell section 20 have been brought to the blade mold 22, the frame 2 and the shell section 20 are moved from a lower position (see figures 1, 4, and 5) into a higher position (see figures 6 and 7) to allow a turning movement of the frame 2 and the shell section 20. For bringing the frame 2 from the lower into the higher position, a lifting motor (not shown) of the assembly rack 1 is used, wherein, once the higher position is reached, vertical fixing means (also not shown) are closed to hold the frame 2 in this position. Next, the frame 2 and the shell section 20 are turned upside down around a horizontal rotation axis to end up in the situation as shown in fig. 7. For rotating the frame 2 together with the shell section upside down, a rotation motor (not shown) of the assembly rack 1 is used. The horizontal rotation axis is defined by two swivel joints 26 of the assembly rack 1. During the rotation, the shell section 20 does not fall down from the frame 2 since it is held by the gripper elements 17.

Next, particularly referring to figures 1, 6, and 7, concrete details regarding the lifting of the frame 2 and its rotation will be described. The frame 2 and the stand 3 are connected to each other by two swivel joints 26, which are provided on both lateral ends of the frame 2. The horizontal rotation axis is defined by the line connecting the 2 swivel joints 26. The stand 3 comprises two vertical posts 27, wherein on each of the posts 27 one of the swivel joints 26 is arranged. Each of the posts 27 comprise two vertical piles 28 having the respective swivel joint 26 guided in between. Hence, each of the swivel joints 26 is movably arranged on the respective post 27 being a sliding post which allows for lifting the frame 2 from the lower into the higher position and vice versa. Each of the swivel joints 26 is releasably fixable on vertical positions along the post 27, particularly in the higher position. For this purpose, the vertical fixing means like clamping means or the like are provided. Each of the swivel joints 26 is realized by a slide 29 which is guided between the pair of piles 28. Each of the slides 29 comprises a receiving portion (no reference number), wherein the frame 2 comprises a bolt (no reference number) on each on its both lateral ends. Each of the swivel joints 26 is realized by one of the bolts being rotatably arranged within one of the receiving portions. The receiving portion comprise an upwards open U-shape.

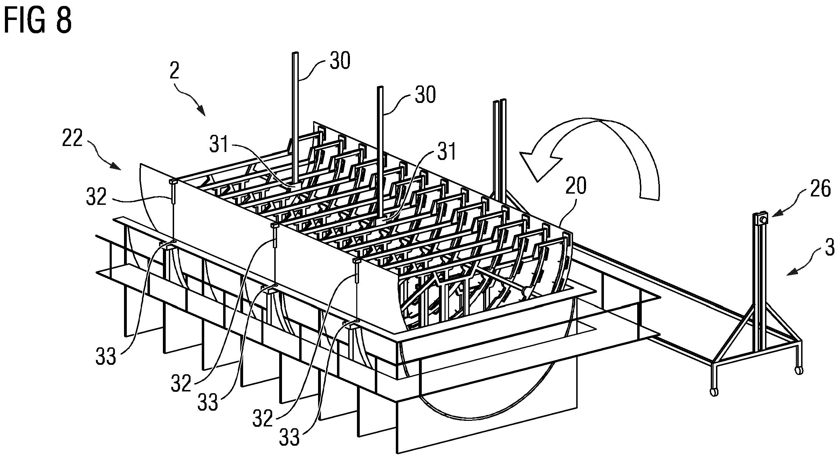

Next, again referring to fig. 7, the shell section 20 is lifted away from the stand 3 and placed in the mold surface of the blade mold 22. For this, lugs 31 of the frame 2 are connected to ropes 30 of a lifting means being particularly a crane. The lifting means lifts the frame 2 together with the shell section 20 away from the stand 3, which is possible because of the upwards open U-shape of the receiving portion of the swivel joints 26 which allows the frame 2 to be disconnected automatically from the stand 3 just by lifting it upwards. The lifting means and the frame 2, which acts in this situation as a lifting yoke, are adapted to lift all preform elements 21 which constitute the shell section 20 during one step. In other words, the complete shell section 20 is lifted by the frame 2 being used as a lifting yoke. For this, the gripper elements 17 of the frame 2 still hold the shell section 20. Next, the shell section 20 is lifted away from the stand 3 and lowered onto the mold surface of the blade mold 22, (see fig. 8).

To ensure a correct positioning of the shell section 20 on the mold surface, the frame 2 comprises guide pins 32 that fit with guide holes 33 of the blade mold 22. Hence, when lowering the frame 2 together with the shell section 20, the guide pins 32 are inserted into the guide holes 33. Speaking more generally, the frame 2 can comprise at least one frame guiding element, particularly being the guide pin 32, and the blade mold 22 can comprise at least one mold guiding element, particularly being the guide hole 33, wherein, for placing the shell section 20 on the blade mold 22, the at least one frame guiding element is inserted into the at least one mold guiding or vice versa.

Once the shell section 20 has reached its designated position in the blade mold 22, the gripper elements 17 of the frame 2 release the shell section 20 and the frame 2 is lifted away, particularly back to the stand 3. The final blade half shell is then manufactured by closing a mold cavity which is constituted by the blade half mold 22 and in which the shell section 20 is arranged. Resin is injected into the mold cavity and cured. The final blade is then manufactured by gluing to blade half shells which have been manufactured as described above together.

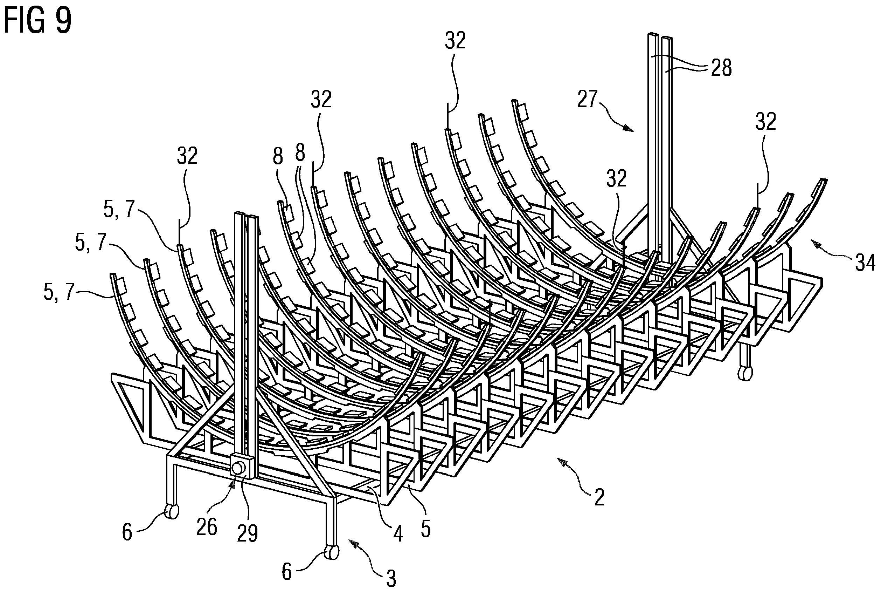

Fig. 9 shows a three-dimensional view on an assembly rack 34 according to a second embodiment of the present invention. Basically, the aspects which have been explained with respect to the first embodiment of the assembly rack 1 with the help of figures 1 to 3 also hold true for the assembly rack 34 of fig. 9. A difference, however, is that the geometry in which the supporting elements 8 are arranged, is a concave geometry such that the overall geometry of the shell section 20 to be produced is a convex geometry.

Also, the assembly rack 34 comprises the frame 2 and the stand 3. The frame 2 is lattice like and has several longitudinal bars 4 and cross-sectional bars 5, wherein transport rollers or -wheels 6 are provided. Some of the cross-sectional bars 5 have a bent structure to provide the convex geometry of the frame 2. These bent cross-sectional bars 5 constitute carrier bars 7 which carry supporting elements 8. The supporting elements 8 are movable as well such that the aspects which have been described with the help of figures 2 and 3 also hold true for the supporting elements 8 of the assembly rack 34. Particularly, the supporting elements 8 of the assembly rack 34 also comprise gripper elements 17 and, some of them, heating means 19.

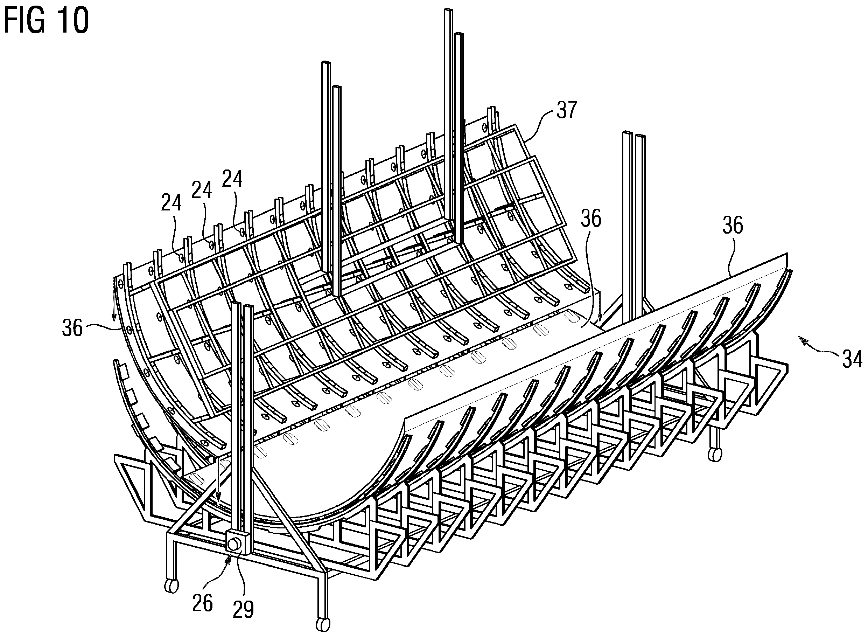

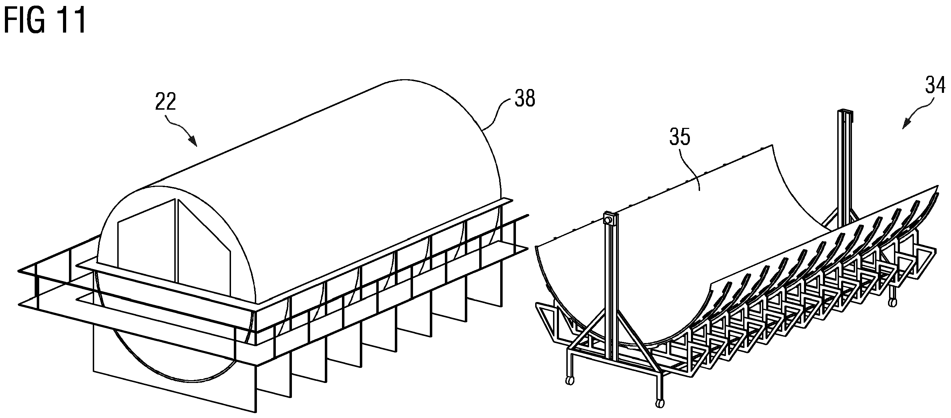

Next, a second embodiment of the method according to the present invention is explained with the help of figures 10 to 14, wherein the assembly rack 34 which has been explained with the help of fig. 9 is used. The aim of this method is to arrange a manufactured shell section 35 (see fig. 11) which is made of several pre-manufactured preform elements 36 on the blade mold 22. Referring to fig. 10, all aspects which have been explained with the help of the preform elements 21 also hold true for the preform elements 29. One difference, however, is that the preform elements 36 comprise a concave shape or geometry, while the preform elements 21 comprise a convex shape or geometry. The shell section 35 to be produced and transported is a half shell section for a root section of a wind turbine blade.

To manufacture the shell section 35, three preform elements 36 are used. In the situation shown in fig. 10, two preform elements 36 are already positioned on the frame 2, while the last preform element 36 is currently lowered into its designated position on the frame 2. The geometry of the shell section 35 to be produced is the same geometry in which the supporting elements 8 are arranged. The preform elements 36 are arranged on the supporting elements 8 side-by-side using a yoke 37 which basically correspond to the yoke 23 of fig. 4. After the preform elements 36 have been arranged on the frame 2, which is performed according to the steps which have been explained with the help of fig. 4, the preform elements 36 are fixed to the supporting elements 8 by the gripper elements 17. Next, using the heating means 19, attaching positions 25 are created in the overlapping region of two adjacent preform elements 37 to adhere these preform elements 37 to each other.

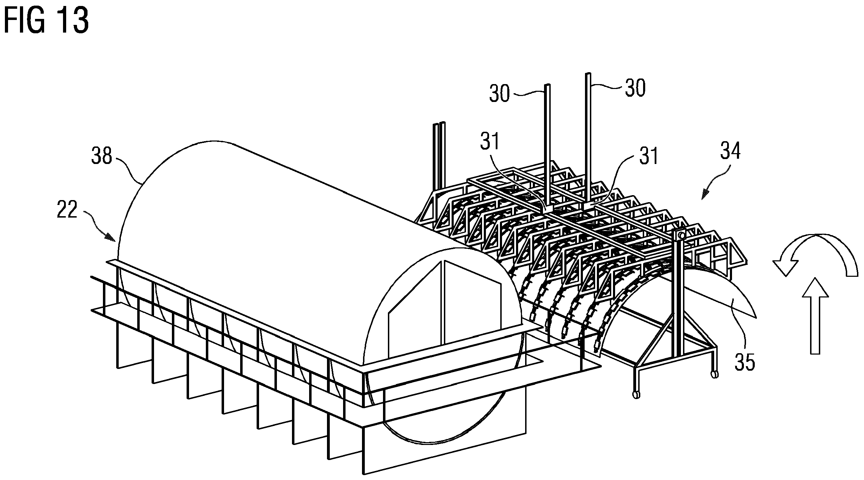

Next, steps for manufacturing a wind turbine blade using the manufactured shell section 35 will be described with the help of figures 11 to 14. Referring to fig. 11, the assembly rack 34 is moved close to the blade half mold 22 using the transport rollers or -wheels 6. Next, the shell section 35 is to be arranged or placed on the mold surface of the blade mold 22. However, as can be seen particularly from fig. 13, the mold surface of the blade mold 22 or of a structural element 38, respectively, has a convex shape which is, regarding the concave shape of the shell section 35, upside down. For instance, a concave shell section 20 which has been manufactured as explained with the help of fig. 4 has been arranged in the blade mold 22. On the blade mold 22, the structural element 38, particularly being or comprising a mandrel, has been positioned.

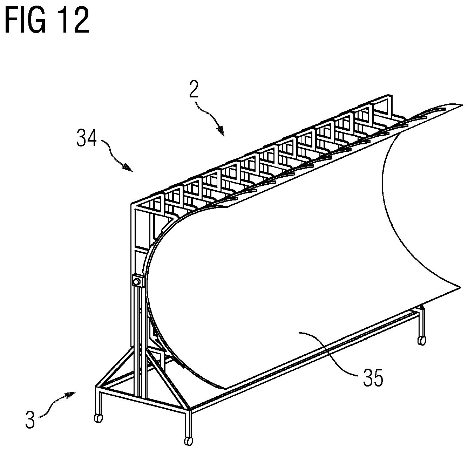

Figures 12 and 13 illustrate that, after, the assembly rack 1 and the shell section 35 have been brought to the blade mold 22, the frame 2 and the shell section 35 are moved from the lower position into the higher position and are subsequently turned upside down to end up in the situation as shown in fig. 13. All aspects regarding this process which have been explained with the help of figures 5 to 7 also hold true for the embodiment of figures 11 to 13.

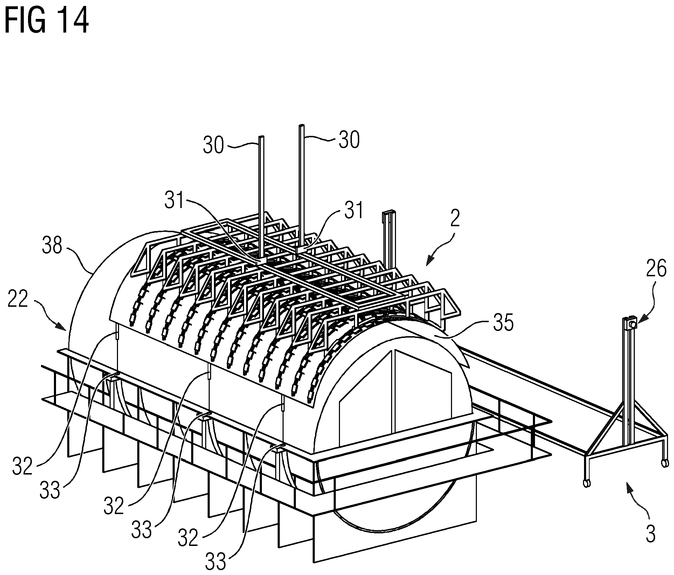

Next, referring to fig. 13, the shell section 35 is lifted away from the stand 3 and placed on the mold surface of the blade mold 22. For this, the lugs 31 of the frame 2 are connected to the ropes 30 of the lifting means being particularly a crane. The lifting means lifts the frame 2 together with the shell section 35 away from the stand 3. Also in this embodiment, frame 2 acts as a lifting yoke which is adapted to lift all preform elements 36 which constitute the shell section 35 during one step. Next, the shell section 35 is lifted away from the stand 3 and lowered onto the mold surface of the blade mold 22, (see fig. 14).

Fig. 14 shows the situation where the frame 2 and the shell section 35 are lowered to the blade half mold 22 and positioned to the structural element 38 using mold- and yoke guiding elements 32, 33 as described above.

Once the shell section 35 has reached its designated position on the blade half mold 22 or structural element 38, respectively, the gripper elements 17 of the frame 2 release the shell section 35 and the frame 2 is lifted, particularly back to the stand 3. The final wind turbine blade is then manufactured by closing a mold cavity which is constituted by the blade mold 22 and wherein the shell sections 20, 35 are arranged. Next, resin is injected into the mold cavity and cured such that the blade is casted in one shot and without any glued joints.

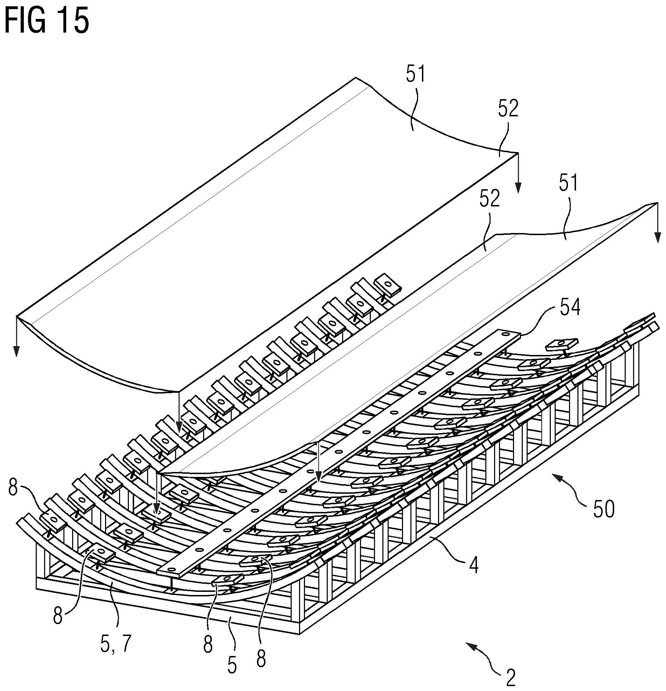

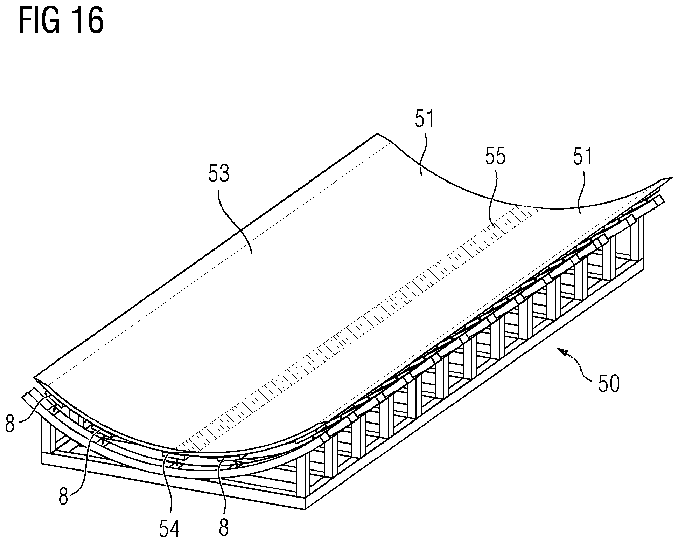

Next, another embodiment of the present invention is explained with the help of figures 15 and 16. All aspects which have been explained with respect to the embodiment which have been explained with the help of figures 9 to 14 basically also hold true for the further embodiment, except from the points which are explained in the following.

Fig. 15 shows a frame 50 of an assembly rack, wherein the frame 50 is equipped with two preform elements 51 which are used to constitute a shell section 53. Details regarding the connection means to connect the frame 50 with the respective stand 3 are not shown in the figures. Fig. 16 shows the frame 50, wherein the preform elements 51 are already placed thereon. For placing the preform elements 51 on the frame 50, a yoke which is not explicitly shown in the figures and which is similar to the yoke 37 is used. Particularly fig. 15 shows that the lateral sections 52 of the preform elements 51 have a tilted, i.e., a wedge-like shape.

Instead of having heating means 16 being integrated in the gripper elements 14, according to this embodiment, a heating device 54 being a separate component with respect to the supporting elements 8 is releasably attached to one row of supporting elements 8. This row is the row where the preform elements 51 are laterally in contact which each other to constitute a common seam. The heating device 54 is stripe- and blanket-like. Hence, instead of getting spot-like attaching positions 25 (see figures 4, 10), a stripe-like attaching area 55 is realized between the preform elements 51 in the region or vicinity of the lateral sections 52.

After the preform elements 51 are adhered to each other, the resulting shell section 53 is further handled as described with respect to figures 11 to 14. Alternatively, the resulting shell section 53 can be treated as one of the preform elements 36 which have been described with the help of fig. 10.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for arranging a shell section (20, 35, 53), particularly a half shell section, on a blade mold (22) for manufacturing a blade or a half shell of a blade of a wind turbine, wherein the method comprises the steps:
- providing several preform elements (21, 36, 51), each comprising a stack of layers of fiber mats fixated to each other,
- arranging the preform elements (21, 36, 51) on supporting elements (8) of a frame (2, 50) of an assembly rack (1) and adhering the preform elements (21, 36, 51) with each other to constitute the shell section (20, 35, 53),
- gripping the shell section (20, 35, 53) to the frame (2, 50) by gripper elements (17) of the assembly rack (1),
- turning the frame (2, 50) and the shell section (20, 35, 53) upside down by at least one swivel joint (26) which rotatably connects the frame (2, 50) with a stand (3) of the assembly rack (1),
- lifting the shell section (20, 35, 53) and placing it on the blade mold (22), wherein the frame (2, 50) being disconnected from the stand (3) is used as a lifting yoke.

2. Method according to claim 1, **characterized in that**, after arranging the preform elements (21, 36, 51) on the supporting elements (8), the frame (2, 50) and the shell section (20, 35, 53) is moved from a lower position into a higher position to allow the turning movement of the frame (2, 50) and the shell section (20, 35, 53).

3. Method according to claim 1 or 2, **characterized in that**, for lifting the shell section (20, 35, 53) and placing it on the blade mold (22), the frame (2, 50) is connected to a lifting means being particularly a crane.

4. Method according to one of the preceding claims, **characterized in that** the fiber mats of each of the preform elements (22, 36, 51) are fixated to each other by means of a heat-activated binding agent, wherein the adjacent preform elements (22, 36, 51) which are laterally in contact with each other are adhered with each other by at least partially heating their lateral sections (52) to re-activate the binding agent.

5. Assembly rack adapted to be used for a method according to the one of the preceding claims and for arranging a shell section (20, 35, 53) on a blade mold (22) for manufacturing a blade or a half shell of a blade of a wind turbine, wherein the assembly rack (1) comprises a stand (3) and a frame (2, 50), wherein several supporting elements (8) are arranged on the frame (2, 50), wherein gripper elements (17) are provided to grip the shell section (20, 35, 53), wherein the frame (2, 50) is rotatably connected to the stand (3) by at least one swivel joint (26) to allow turning the frame (2, 50) and the shell section (20, 35, 53) upside down, wherein the frame (2, 50) is adapted to be disconnected from the stand (3) and to be used as a lifting yoke for lifting the shell section (20, 35, 53) and placing it on the blade mold (22).

6. Assembly rack according to claim 5, **characterized in that** two swivel joints (26) are provided on both lateral ends of the frame (2, 50) to attach the frame (2, 50) to the stand (3) .

7. Assembly rack according to claim 6, **characterized in that** the stand (3) comprises two, particularly vertically oriented, posts (27), wherein on each of the posts (27) one swivel joint (26) is arranged.

8. Assembly rack according to claim 7, **characterized in that** each of the posts (27) is a sliding post, wherein each of the swivel joints (26) is arranged on or provided by a slide (29) which is movable along the respective sliding post such that the frame (2, 50) and the shell section (20, 35, 53) is movable from a lower position into a higher position to allow the turning movement of the frame (2, 50) and the shell section (20, 35, 53).

9. Assembly rack according to one of the claims 5 to 8, **characterized in that** at least one of the supporting elements (8) comprises a heating means (19) for generating heat which is transferrable to the preform element (21, 36, 51) or the preform elements (21, 36, 51) arranged thereon to activate the binding agent.

10. Assembly rack according to one of the claims 5 to 9, **characterized in that** the gripper elements (17) are or comprise needle grippers and/or vacuum grippers and/or Bernoulli grippers and/or vortex grippers.

11. Assembly rack according to one of the claims 5 to 10, **characterized in that** the frame (2, 50) comprises several carrier bars (7) on which the supporting elements (8) are attached.

12. Assembly rack according to claim 11, **characterized in that** at least one of the supporting elements (8) is movable along the respective carrier bar (7) being a sliding rail and/or perpendicularly with respect to the respective carrier bar (7) and lockable in the respective positions.

13. Assembly rack according to claim 12, **characterized in that** the at least one movable supporting element (8) is connected to a sliding shoe (9) which is guided in the respective sliding rail and/or the at least one movable supporting element (8) is or comprises a support plate (14), particularly made of a hard foam, on which the respective preform element (21, 36, 51) is arrangeable, wherein the support plate (14) is height-adjustable with respect to the respective carrier bar (7).

14. Assembly rack according to one of the claims 5 to 13, **characterized in that** the frame (2, 50) comprises at least one connection means (31), being particularly a lug, such that the frame (2, 50) is connectable with a lifting means, to allow for lifting the frame (2, 50) and the shell section (20, 35, 53) and for placing the shell section (20, 35, 53) on the blade mold (22), using the frame (2, 50) as the lifting yoke.

15. Assembly rack according to one of the claims 5 to 14, **characterized in that** the frame (2, 50) has a concave or convex shape such that it is adapted to be used for manufacturing a shell section (20, 35, 53) which has a convex or concave section geometry.
